# EUROPÄISCHE PATENTANMELDUNG

(11) **EP 4 667 876 A1**
(43) Veröffentlichungstag der Anmeldung: **24.12.2025**
(21) Anmeldenummer: 24182497.8
(22) Anmeldetag: 17.06.2024
(51) Int. Cl.: G01D 4/00

(54) **ELEKTRIZITÄTSZÄHLER MIT EINEM NETZTEIL**

(71) Anmelder: EMH metering GmbH & Co. KG, 19258 Gallin (DE)
(72) Erfinder: Buckentin, Michael, 21149 Hamburg (DE); Pancic, Sasa, 21423 Winsen (DE)
(74) Vertreter: Hauck Patent- und Rechtsanwälte PartmbB

(57) **Zusammenfassung**

Elektrizitätszähler mit
• einem Eingangs-Anschluss zum Verbinden mit einem elektrischen Versorgungsnetz,
• einem Ausgangs-Anschluss,
• einer Messeinrichtung zur Bereitstellung von Strom- und Spannungsmesswerten,
• einer Recheneinrichtung zur Berechnung von Energiedaten auf Grundlage der Strom- und Spannungsmesswerte,
• einem Datenspeicher,
• einer Datenschnittstelle zur Übertragung von in dem Datenspeicher gespeicherten Energiedaten,
• einem Netzteil, dessen Eingang mit dem Eingangs-Anschluss verbunden ist und das zur Energieversorgung des Elektrizitätszählers in einem Messbetrieb ausgelegt ist, wobei
• der Elektrizitätszähler eine Bereitschafts-Spannungsversorgung aufweist, die Teile des Elektrizitätszählers in einem Bereitschaftsbetrieb mit Energie von der Datenschnittstelle versorgt, sodass ein Auslesen von Energiedaten aus dem Datenspeicher über die Datenschnittstelle und/oder eine Konfiguration des Elektrizitätszählers möglich ist, wenn das elektrische Versorgungsnetz spannungsfrei und/oder nicht mit dem Eingangs-Anschluss verbunden ist.

## Beschreibung

Die Erfindung betrifft einen Elektrizitätszähler mit den Merkmalen des Oberbegriffs des Anspruchs 1. Der Elektrizitätszähler weist ein Netzteil auf, das zur Energieversorgung des Elektrizitätszählers in einem Messbetrieb aus dem elektrischen Versorgungsnetz ausgelegt ist.

Derartige Elektrizitätszähler werden für unterschiedliche Anwendungen eingesetzt, beispielsweise als Haushaltszähler oder in Industriebetrieben. In den meisten Fällen ist eine Energieversorgung des Elektrizitätszählers ausschließlich über das Netzteil möglich, sodass die Elektrizitätszähler erst dann eine Funktion haben, wenn sie an das elektrische Versorgungsnetz angeschlossen sind.

Einige Elektrizitätszähler weisen als alternative Spannungsversorgung eine kleine Batterie auf, die z.B. eine Aufrechterhaltung von in dem Datenspeicher gespeicherten Verbrauchsdaten ermöglicht.

Bei nicht direkt messenden Zählern, bei denen die zu messende Ströme über Stromwandler erfasst werden, ist auch eine ausschließliche Energieversorgung des Elektrizitätszählers über eine sogenannte Hilfsspannung bekannt. Diese versorgt dann ein Netzteil, das den Elektrizitätszähler im Messbetrieb mit Energie versorgt.

Schließlich gibt es im Elektrizitätszählerbereich verwendbare Datenschnittstellen, über die eine Energieversorgung aus einer angeschlossenen Datenleitung möglich ist. Mit dieser Energieversorgung kann zum Beispiel ein Schnittstellen-Schaltkreis beispielsweise nach dem RS485-Standard versorgt werden. Dadurch kann die Betriebsbereitschaft der Datenschnittstelle unabhängig von einer Energieversorgung des Elektrizitätszählers aufrechterhalten werden. Ein darüber hinausgehender Betrieb eines mit einer solchen Datenschnittstelle versehenen Geräts wird durch diese Energieversorgung jedoch nicht ermöglicht.

Davon ausgehend ist es ist die Aufgabe der Erfindung, einen Elektrizitätszähler zur Verfügung zu stellen, der in einem Bereitschaftsbetrieb unabhängig von der Verfügbarkeit des elektrischen Versorgungsnetzes betrieben werden kann.

Diese Aufgabe wird gelöst durch den Elektrizitätszähler mit den Merkmalen des Anspruchs 1. Der Elektrizitätszähler hat
- einen Eingangs-Anschluss zum Verbinden mit einem elektrischen Versorgungsnetz,
- einen Ausgangs-Anschluss zum Verbinden mit mindestens einem elektrischen Energieverbraucher und/oder -erzeuger,
- eine Messeinrichtung zur Bereitstellung von Strom- und Spannungsmesswerten,
- eine Recheneinrichtung zur Berechnung von Energiedaten auf Grundlage der Strom- und Spannungsmesswerte,
- einen Datenspeicher zur Speicherung der Energiedaten,
- eine Datenschnittstelle zur Übertragung von in dem Datenspeicher gespeicherten Energiedaten,
- ein Netzteil, dessen Eingang mit dem Eingangs-Anschluss verbunden ist und das zur Energieversorgung des Elektrizitätszählers in einem Messbetrieb aus dem elektrischen Versorgungsnetz ausgelegt ist, wobei
- der Elektrizitätszähler eine Bereitschafts-Spannungsversorgung aufweist, die dazu ausgebildet ist, Teile des Elektrizitätszählers in einem Bereitschaftsbetrieb mit Energie von der Datenschnittstelle zu versorgen, sodass ein Auslesen von Energiedaten aus dem Datenspeicher über die Datenschnittstelle und/oder eine Konfiguration des Elektrizitätszählers möglich ist, wenn das elektrische
Versorgungsnetz spannungsfrei und/oder nicht mit dem Eingangs-Anschluss (L1_{E}, L2_{E}, L3_{E}) verbunden ist.

Der Eingangs-Anschluss und der Ausgangs-Anschluss können Anschlussklemmen aufweisen, an die die Leiter einer oder mehrerer Phasen des Versorgungsnetzes bzw. des elektrischen Energieverbrauchers und/oder -erzeugers angeschlossen werden können. Es handelt sich um einen direkt messenden Elektrizitätszähler.

Die Messeinrichtung kann einen Messwiderstand (englisch: *shunt*) je Phase aufweisen, sodass die an dem jeweiligen Messwiderstand abfallende Spannung Aufschluss über die Stromstärke gibt. Die Messeinrichtung kann außerdem einen Spannungsteiler je Phase aufweisen. Spannungswerte, die für die Spannung und den Strom repräsentativ sind, werden von der Messeinrichtung gemessen und von einem A/D-Wandler in digitaler Form bereitgestellt.

Die Recheneinrichtung kann auf Grundlage der Strom- und Spannungsmesswerte Energiedaten berechnen. Die Energiedaten werden in einem Datenspeicher, beispielsweise einem EEPROM, gespeichert.

Über die Datenschnittstelle des Elektrizitätszählers können in dem Datenspeicher gespeicherte Energiedaten übertragen werden, beispielsweise per Fernabfrage über ein Datennetzwerk, das an die Datenschnittstelle angeschlossen ist.

Zur Energieversorgung des Elektrizitätszählers im Messbetrieb weist der Elektrizitätszähler ein Netzteil auf, das aus dem elektrischen Versorgungsnetz gespeist wird. Beispielsweise kann es sich um ein einfaches Kondensatornetzteil handeln.

Die Besonderheit der Erfindung besteht darin, dass der Elektrizitätszähler zusätzlich eine Bereitschafts-Spannungsversorgung aufweist, die unabhängig von dem elektrischen Versorgungsnetz einen Bereitschaftsbetrieb des Elektrizitätszählers ermöglicht. In diesem Bereitschaftsbetrieb sind mindestens diejenigen Teile des Elektrizitätszählers mit Spannung versorgt, die zum Auslesen von Energiedaten aus dem Datenspeicher bzw. zur Konfiguration des Elektrizitätszählers benötigt werden. Die Energieversorgung über die Bereitschafts-Spannungsversorgung erfolgt dabei mit Energie von der Datenschnittstelle. Demnach wird zur Ermöglichung des Bereitschaftsbetriebs weder eine Batterie noch eine separate Hilfsspannung benötigt.

Die Erfindung beruht auf der Erkenntnis, dass über die Datenschnittstelle ausreichend elektrische Energie verfügbar ist, um ein Auslesen des Elektrizitätszählers und/oder eine Konfiguration des Elektrizitätszählers zu ermöglichen. Ein solcher Bereitschaftsbetrieb ist in unterschiedlichen Anwendungssituation sehr hilfreich. Dies gilt beispielsweise für Elektrizitätszähler, die typischerweise in Industriebetrieben eingesetzt werden. An einen solchen Elektrizitätszähler angeschlossene, elektrische Anlagen müssen zum Beispiel für Wartungs- und/oder Einrichtungsarbeiten spannungsfrei geschaltet werden, wofür aus Sicherheitsgründen das elektrische Versorgungsnetz abgeschaltet beziehungsweise von dem Elektrizitätszähler getrennt wird. In diesem Fall ermöglicht die Erfindung, die Elektrizitätszähler bei abgeschaltetem elektrischem Versorgungsnetz in den Bereitschaftsbetrieb zu versetzen. Dadurch wird vermieden, dass eine Abfrage der Energiedaten durch Dritte während der Wartungs- und/oder Einrichtungsarbeiten fehlschlägt, was häufig zu Fehlern oder zusätzlichem Arbeitsaufwand führt, z.B. für die Nachbildung von Messwerten in einem Auslesesystem.

In der alternativ oder zusätzlich möglichen Variante kann der Elektrizitätszähler im Bereitschaftsbetrieb konfiguriert werden, wenn das elektrische Versorgungsnetz spannungsfrei und/oder nicht mit dem Eingangs-Anschluss verbunden ist. Dies kann die Konfiguration z.B. im Werk des Herstellers oder beim Endnutzer vereinfachen, weil lediglich eine Verbindung über die Datenschnittstelle hergestellt werden muss, um den Elektrizitätszähler zu konfigurieren. Der für die Verbindung mit dem Versorgungsnetz erforderliche Aufwand und die damit verbundenen Gefahren entfallen. Die Konfiguration des Elektrizitätszählers kann zum Beispiel das Aufspielen einer Firm- oder Software umfassen oder das Einstellen bestimmter, für den Betrieb des Elektrizitätszählers wichtiger Parameter. Die Konfiguration kann über eine über die Datenschnittstelle hergestellte Datenverbindung erfolgen, aber auch über eine sonstige Schnittstelle oder auch manuell.

In einer Ausgestaltung ist die Bereitschafts-Spannungsversorgung so eingerichtet, dass sie die Messeinrichtung nicht mit Energie versorgt. Dadurch kann der Energieverbrauch des Elektrizitätszählers im Bereitschaftsbetrieb geringgehalten werden, sodass eine ausreichende Energieversorgung problemlos über die Datenschnittstelle erfolgen kann.

In einer Ausgestaltung ist die Bereitschafts-Spannungsversorgung dazu ausgebildet, für unterschiedliche Elemente des Elektrizitätszählers mindestens zwei unterschiedliche Bereitschafts-Versorgungsspannungen bereitzustellen. Dadurch können alle für den gewünschten Bereitschaftsbetrieb benötigten Elemente versorgt werden.

In einer Ausgestaltung ist die Datenschnittstelle eine serielle Schnittstelle und die Bereitschafts-Spannungsversorgung ist dazu ausgebildet, aus einer an der seriellen Schnittstelle anliegenden Spannung eine Bereitschafts-Versorgungsspannung bereitzustellen und/oder zu stabilisieren. Beispielsweise kann die Datenschnittstelle dem RS485-Standard entsprechen. Aus den an der Datenschnittstelle anliegenden Spannungen kann beispielsweise eine Gleichspannung von 3 V bis 5 V für einen Kommunikations-Transceiver (z.B. ein RS485-Chip) und eine Gleichspannung von 3,3 V für eine Recheneinrichtung bereitgestellt werden.

In einer Ausgestaltung werden die im Bereitschaftsbetrieb von der Bereitschafts-Spannungsversorgung versorgten Teile des Elektrizitätszählers im Messbetrieb von dem Netzteil mit elektrischer Energie versorgt. Im Messbetrieb wird die Datenschnittstelle daher nicht zur Deckung der Energieversorgung belastet. Die Umschaltung zwischen Bereitschafts-Spannungsversorgung und Versorgung über das Netzteil kann automatisch erfolgen, beispielsweise mithilfe einer einfachen Dioden Schaltung.

In einer Ausgestaltung umfassen die im Bereitschaftsbetrieb von der Bereitschafts-Spannungsversorgung versorgten Teile des Elektrizitätszählers den Datenspeicher. Dadurch kann für den Datenzugriff im Bereitschaftsbetrieb ohne weiteres auf den Datenspeicher zugegriffen werden.

In einer Ausgestaltung umfassen die im Bereitschaftsbetrieb von der Bereitschafts-Spannungsversorgung versorgten Teile des Elektrizitätszählers eine elektronische Anzeige des Elektrizitätszählers. Die elektronische Anzeige kann beispielsweise ein LC-Display sein. Mithilfe der elektronischen Anzeige können im Bereitschaftsbetrieb Energiedaten oder Informationen über die aktuelle Konfiguration des Elektrizitätszählers abgelesen werden. Eine Anpassung der Konfiguration ist ebenfalls möglich, insbesondere wahlweise über die Datenschnittstelle oder mithilfe der elektronischen Anzeige und/oder geeigneter Eingabeelemente.

In einer Ausgestaltung umfassen die im Bereitschaftsbetrieb von der Bereitschafts-Spannungsversorgung versorgten Teile des Elektrizitätszählers die Recheneinrichtung. Bei der Recheneinrichtung kann es sich um eine zentrale Recheneinrichtung handeln, die zur Steuerung aller wesentlichen Funktionen des Elektrizitätszählers eingerichtet ist. Diese ist mit der Messeinrichtung verbunden, kann im Bereitschaftsbetrieb jedoch mit dieser nicht zusammenwirken, weil die Messeinrichtung nicht mit Energie versorgt und gegebenenfalls gar nicht initialisiert ist. Alternativ kann die Rechnereinrichtung des Elektrizitätszählers mehrere getrennte Elemente aufweisen, beispielsweise einen für den Messbetrieb und die Kommunikation mit der Messeinrichtung wichtigen Hauptprozessor und einen weiteren Prozessor, der zum Beispiel für die Datenverschlüsselung eingesetzt wird. In diesem Fall kann zum Beispiel lediglich der Hauptprozessor im Bereitschaftsbetrieb mit Energie versorgt werden.

In einer Ausgestaltung ist die Recheneinrichtung dazu ausgebildet, über die Datenschnittstelle zu übertragende Daten zu verschlüsseln. Dies kann insbesondere in einem für die Datenkommunikation eingerichteten Prozessor erfolgen. Wird dieser im Bereitschaftsbetrieb mit Energie versorgt, kann die Kommunikation im Bereitschaftsbetrieb in derselben Art und Weise erfolgen, wie im Messbetrieb. Dies ist für einen reibungslosen Ablauf hilfreich, insbesondere wenn die Energiedaten von dem Elektrizitätszähler durch Dritte ausgelesen werden sollen.

In einer Ausgestaltung richtet sich die Erfindung auf eine Ladevorrichtung für ein elektrisches Fahrzeug, die einen Elektrizitätszähler nach einem der Ansprüche 1 bis 9 und eine Schalteinrichtung aufweist, die eine Verbindung zwischen dem elektrischen Versorgungsnetz und dem Eingangs-Anschluss des Elektrizitätszählers herstellen und trennen kann. Die Schalteinrichtung kann zum Beispiel ein Schütz, ein Relais oder ein Halbleiterschalter sein. Bei derartigen Ladevorrichtungen, insbesondere bei öffentlich zugänglichen Ladestationen, muss ein Ladeanschluss für das Elektrofahrzeug außerhalb des Ladebetriebs spannungsfrei gehalten werden. In Verbindung mit dem erfindungsgemäßen Elektrizitätszähler kann eine hierfür eingesetzte Schalteinrichtung an der Eingangsseite des Elektrizitätszählers angeordnet werden, sodass außerhalb des Ladebetriebs nicht nur der Ladeanschluss, sondern auch der zwischen diesem Ladeanschluss und dem elektrischen Versorgungsnetz angeordnete Elektrizitätszähler von dem elektrischen Versorgungsnetz getrennt wird. Dank der Erfindung kann der Elektrizitätszähler dann im Bereitschaftsbetrieb betrieben werden und die für das Vor- und Nachbereiten des Ladevorgangs erforderliche Funktionalität bereitstellen. Beispielsweise kann der Elektrizitätszähler im Bereitschaftsbetrieb einem Endkunden eine Verifikation des korrekten Zustands des Ladesystems ermöglichen. Ein besonderer Vorteil der beanspruchten Ladevorrichtung ist, dass die Schalteinrichtung außerhalb des eichpflichtigen Bereichs angeordnet ist. Dieser erstreckt sich auf die gesamte Kette zwischen dem Elektrizitätszähler und dem Übergabepunkt an den Endkunden (Ladeanschluss). Eine Wartung oder Reparatur der Schalteinrichtung kann daher außerhalb der Eichkette erfolgen, eine kostenintensive Nachprüfung der Eichbehörde ist nicht erforderlich. Zusätzlich zur Vermeidung einer Nachprüfung als solcher können Folgeschwierigkeiten ausgeschlossen werden, die sich in der Praxis aus der nach Nacheichung der Ladeinfrastruktur ergeben können. Insbesondere kann bei einer Nacheichung ein Konformitätsdatum des Elektrizitätszählers von der neu terminierten Zulassung abweichen.

In einer Ausgestaltung ist der Ausgangs-Anschluss über ein Kabel unmittelbar mit einer Ladebuchse oder einem Ladestecker verbunden. In diesem Fall beschränkt sich die Eichkette zwischen Elektrizitätszähler und Übergabepunkt im Wesentlichen auf das Kabel. Reparatur- oder Wartungsarbeiten, die eine Nacheichung erfordern, können praktisch ausgeschlossen werden.

In einer Ausgestaltung weist der Elektrizitätszähler einen Schaltausgang auf, über den die Schalteinrichtung angesteuert wird, wobei die im Bereitschaftsbetrieb von der Bereitschafts-Spannungsversorgung versorgten Teile des Elektrizitätszählers den Schaltausgang umfassen. Dadurch gelingt es, mithilfe der Bereitschafts-Spannungsversorgung die Verbindung mit dem elektrischen Versorgungsnetz herzustellen, sodass schnell und zeitkorrekt zur Messzeiterfassung in den Messbetrieb gewechselt werden kann.

Nachfolgend wird die Erfindung anhand von Figuren näher erläutert. Es zeigen:
- Fig. 1: eine schematische Darstellung wesentlicher Elemente eines Elektrizitätszählers,
- Fig. 2: eine schematische Darstellung eines weiteren Elektrizitätszählers,
- Fig. 3: eine Ladestation mit einem Elektrizitätszähler.

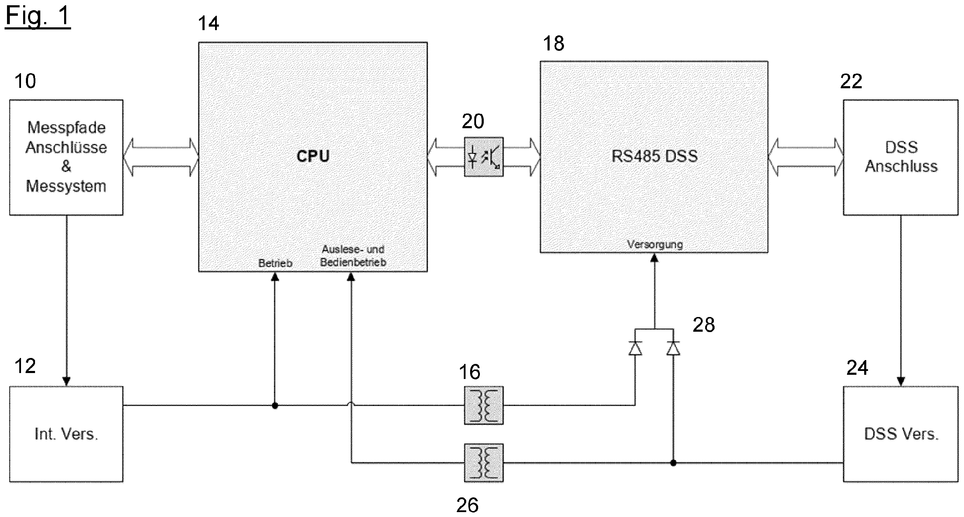

Der Elektrizitätszähler aus Fig. 1 hat eine Messeinrichtung 10 ("Messpfade Anschlüsse & Messystem") zur Bereitstellung von Strom- und Spannungsmesswerten. Diese ist mit einem Eingangs-Anschluss und einem Ausgangs-Anschluss verbunden, was in Fig. 1 nicht gezeigt ist.

Der Elektrizitätszähler hat ein Netzteil 12 mit einem Eingang, der mit dem Eingangs-Anschluss verbunden ist. Das Netzteil stellt im Messbetrieb die Versorgung einer Recheneinrichtung 14 und, über einen ersten Spannungswandler 16, einer Kommunikations-Recheneinrichtung ("RS485 DSS") 18 bereit. Die Recheneinrichtung 14 und die Kommunikations-Recheneinrichtung 18 sind über einen Optokoppler 20 miteinander verbunden. Die Kommunikations-Recheneinrichtung 18 ist mit einer Datenschnittstelle 22 ("DSS Anschluss") verbunden.

Weiterhin umfasst der Elektrizitätszähler aus Fig. 1 eine Bereitschafts-Spannungsversorgung 24 ("DSS-Vers."), die eine Spannungsversorgung aus der Datenschnittstelle 22 erhält. In dieser Weise von der Datenschnittstelle 20 gespeist, stellt die Bereitschafts-Spannungsversorgung 24 elektrische Energie für die Kommunikations-Recheneinrichtung 18 und, über einen weiteren Spannungswandler 26, für die Recheneinrichtung 14 bereit. Dies gelingt und erfolgt, wenn das elektrische Versorgungsnetz (in Fig. 1 nicht dargestellt) spannungsfrei und/oder nicht mit dem Eingangs-Anschluss des Elektrizitätszählers verbunden ist.

Die Umschaltung der Energieversorgung der genannten Teile des Elektrizitätszählers erfolgt über eine Dioden-Schaltung 28. Sobald der Eingangs-Anschluss mit dem elektrischen Versorgungsnetz verbunden ist und dieser Spannung führt, erfolgt die Versorgung des gesamten Elektrizitätszählers automatisch über das Netzteil 12 und der Elektrizitätszähler befindet sich im Messbetrieb.

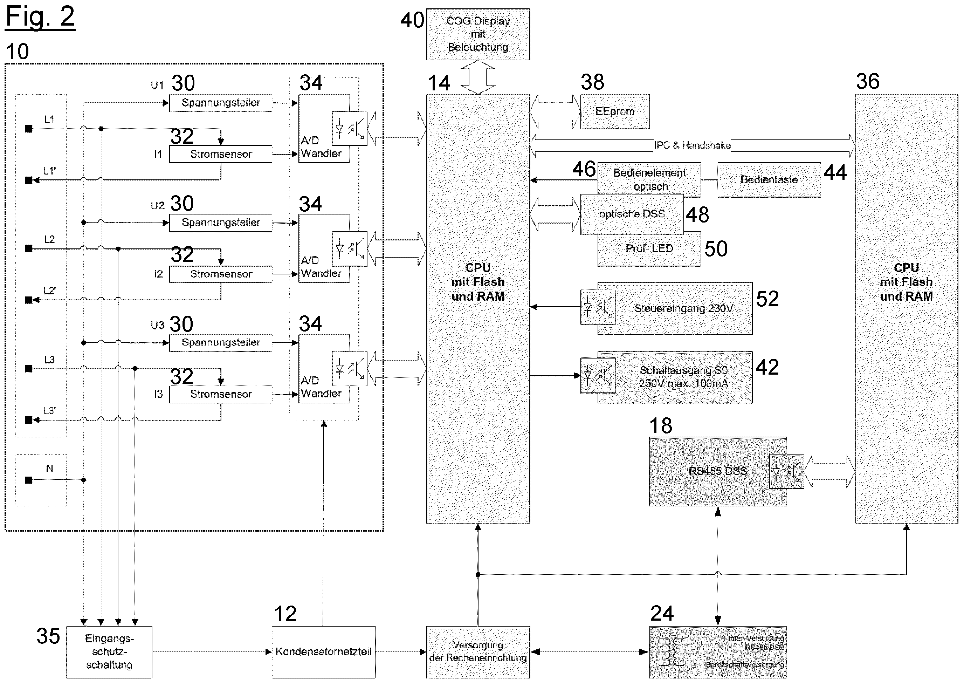

In Fig. 2 ist ein anderer Elektrizitätszähler ebenfalls schematisch, aber teilweise detaillierter dargestellt. Man erkennt, dass die im linken Teil der Fig 2 gezeigte Messeinrichtung 10 einen Eingangs-Anschluss L1, L2, L3 für drei Phasen sowie einen Ausgangs-Anschluss L1`, L2`, L3` für diese drei Phasen aufweist. Ebenfalls zur Messeinrichtung 10 gehören drei Spannungsteiler 30 für die drei Spannungen U1, U2 und U3 der jeweiligen Phasen und drei Messwiderstände 32 ("Stromsensor") für die Ströme I1, I2 und I3 dieser Phasen. Die Spannungsteiler 30 und Messwiderstände 32 stellen Ausgangssignale bereit, die von drei A/D-Wandlern 34 in digitale Signale umgewandelt und der Recheneinrichtung 14 ("CPU mit Flash und RAM") zur Verfügung gestellt werden.

Mit dem Eingangs-Anschluss L1, L2, L3 ist ein Netzteil 12 des Elektrizitätszählers über eine Eingangsschutzschaltung 35 verbunden. Das Netzteil 12 ("Kondensatornetzteil") dient zur Versorgung der gesamten Elektronik des Elektrizitätszählers im Messbetrieb. Insbesondere versorgt das Netzteil 12 die A/D-Wandler 44, was durch den vom Netzteil 12 nach oben weisenden Pfeil dargestellt ist.

Die Bereitschafts-Spannungsversorgung 24 dient im Bereitschaftsbetrieb zur Versorgung einer Kommunikations-Recheneinrichtung 18 ("RS485 DSS"). Außerdem versorgt die Bereitschafts-Spannungsversorgung 24 im Bereitschaftsbetrieb die Recheneinrichtung 14 und eine Verschlüsselungs-Recheneinrichtung 36 ("CPU mit Flash und RAM"). Dies wird durch weitere Pfeile in Fig. 2 dargestellt, die von dem mit "Versorgung der Recheneinheit" beschrifteten Kasten 25 ausgehen, der seinerseits mit der Bereitschafts-Spannungsversorgung 24 verbunden ist. Der Kasten 25 enthält insbesondere eine geeignete Spannungsstabilierungseinrichtung. Im Messbetrieb wird diese Spannungsstabilierungseinrichtung vom Netzteil 12 versorgt, was durch einen weiteren Pfeil zum Ausdruck kommt, der vom Netzteil 12 zu dem Kasten 25 führt.

Im Bereitschaftsbetrieb wird außerdem ein Datenspeicher 38 ("EEprom"), eine elektronische Anzeige 40 ("COG-Display mit Beleuchtung") und ein Schaltausgang 42 ("Schaltausgang S0 250V max. 100mA") mit elektrischer Energie versorgt.

Die Recheneinrichtung 14 ist über die Verschlüsselungs-Recheneinrichtung 36 mit der Kommunikations-Recheneinrichtung 18 verbunden, sodass Energiedaten aus dem Datenspeicher 38 über die Datenschnittstelle (in Fig. 2 nicht gezeigt) im Bereitschaftsbetrieb abgefragt werden können. Hierzu greift die Recheneinrichtung 14 auf den Datenspeicher 38 zu, übergibt die Energiedaten an die Verschlüsselungs-Recheneinrichtung 36, von wo aus die Daten in verschlüsselter Form weiter an die Kommunikations-Recheneinrichtung 18 übermittelt werden.

Figur 2 zeigt, dass der Elektrizitätszähler außerdem eine Bedientaste 44, ein optisches Bedienelement 46, eine optische Datenschnittstelle 48, eine Prüf-LED 50 sowie einen Systemspannungseingang 52 aufweist. Diese Elemente können ebenso wie die zuvor genannten ebenfalls im Bereitschaftsbetrieb genutzt werden, sofern dies für die im Bereitschaftsbetrieb auszuführenden Schritte sinnvoll ist. Beispielsweise können die Bedientaste 44 und die Anzeige 40 zur Konfiguration des Elektrizitätszählers herangezogen werden.

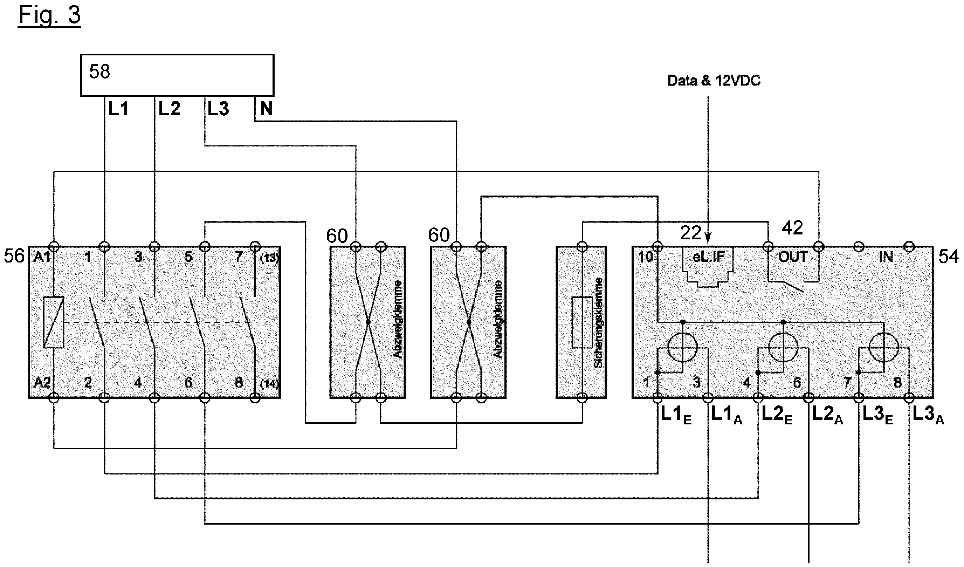

Figur 3 zeigt eine Ladevorrichtung für ein elektrisches Fahrzeug mit einem Elektrizitätszähler 54 und einer alsSchütz ausgeführten Schalteinrichtung 56. Der Elektrizitätszähler 54 weist einen Eingangs-Anschluss L1_{E}, L2_{E}, L3_{E} für die drei Phasen L1, L2, L3 eines elektrischen Versorgungsnetzes 58 auf. Dieser Eingangs-Anschluss L1_{E}, L2_{E}, L3_{E} ist über die Schalteinrichtung 56, die alle drei Phasen schaltet, mit dem elektrischen Versorgungsnetz 58 verbunden. Die Phase L3 ist zwischen dem elektrischen Versorgungsnetz 58 und der Schalteinrichtung 56 durch eine Abzweigklemme 60 geführt.

Der Ausgangs-Anschluss L1_{A}, L2_{A}, L3_{A} des Elektrizitätszählers 54 umfasst ebenfalls alle drei Phasen und ist unmittelbar mit einem nicht dargestellten Ladekabel, das an einem Übergabepunkt mit einer Ladebuchse oder einem Ladestecker endet, verbunden.

Bei geöffneter Schalteinrichtung 56 (wie gezeigt) ist der Eingangs-Anschluss L1_{E}, L2_{E}, L3_{E} des Elektrizitätszählers 54 nicht mit dem elektrischen Versorgungsnetz 58 verbunden. Der Elektrizitätszähler 54 befindet sich dann in einem Bereitschaftsbetrieb und wird über eine Bereitschafts-Spannungsversorgung (in Fig. 3 nicht gezeigt) über die Datenschnittstelle 22 ("eL.IF") versorgt. Der Elektrizitätszähler 54 hat einen Schaltausgang 42 ("OUT"), über den die Schalteinrichtung 56 angesteuert wird. Man erkennt, dass sich die Schalteinrichtung 56 außerhalb der Eichkette befindet.

### Liste der Bezugszeichen

- 10: Messeinrichtung
- 12: Netzteil
- 14: Recheneinrichtung
- 16: Spannungswandler
- 18: Kommunikations-Recheneinrichtung
- 20: Optokoppler
- 22: Datenschnittstelle
- 24: Bereitschafts-Spannungsversorgung
- 25: Kasten
- 26: weiterer Spannungswandler
- 28: Dioden Schaltung
- 30: Spannungsteiler
- 32: Messwiderstand
- 24: A/D-Wandler
- 35: Eingangs-Schutzschaltung
- 36: Verschlüsselungs-Recheneinrichtung
- 38: Datenspeicher
- 40: elektronische Anzeige
- 42: Schaltausgang
- 44: Bedientaste
- 46: optisches Bedienelement
- 48: optische Datenschnittstelle
- 50: Prüf-LED
- 52: Systemspannungseingang
- 54: Elektrizitätszähler
- 56: Schalteinrichtung
- 58: elektrisches Versorgungsnetz
- 60: Abzweigklemme

## Patentansprüche

1. Elektrizitätszähler (54) mit
• einem Eingangs-Anschluss (L1_{E}, L2_{E}, L3_{E}) zum Verbinden mit einem elektrischen Versorgungsnetz,
• einem Ausgangs-Anschluss (L1_{A}, L2_{A}, L3_{A}) zum Verbinden mit mindestens einem elektrischen Energieverbraucher und/oder -erzeuger,
• einer Messeinrichtung (10) zur Bereitstellung von Strom- und Spannungsmesswerten,
• einer Recheneinrichtung (14) zur Berechnung von Energiedaten auf Grundlage der Strom- und Spannungsmesswerte,
• einem Datenspeicher (38) zur Speicherung der Energiedaten,
• einer Datenschnittstelle (22) zur Übertragung von in dem Datenspeicher (38) gespeicherten Energiedaten,
• einem Netzteil (12), dessen Eingang mit dem Eingangs-Anschluss (L1_{E}, L2_{E}, L3_{E}) verbunden ist und das zur Energieversorgung des Elektrizitätszählers (54) aus dem elektrischen Versorgungsnetz (58) in einem Messbetrieb ausgelegt ist, **dadurch gekennzeichnet, dass**
• der Elektrizitätszähler (54) eine Bereitschafts-Spannungsversorgung (24) aufweist, die dazu ausgebildet ist, Teile des Elektrizitätszählers (54) in einem Bereitschaftsbetrieb mit Energie von der Datenschnittstelle (22) zu versorgen, sodass ein Auslesen von Energiedaten aus dem Datenspeicher (38) über die Datenschnittstelle (22) und/oder eine Konfiguration des Elektrizitätszählers (54) möglich ist, wenn das elektrische Versorgungsnetz (58) spannungsfrei und/oder nicht mit dem Eingangs-Anschluss (L1_{E}, L2_{E}, L3_{E}) verbunden ist.

2. Elektrizitätszähler (54) nach Anspruch 1, **dadurch gekennzeichnet, dass** die Bereitschafts-Spannungsversorgung (24) so eingerichtet ist, dass sie die Messeinrichtung (10) nicht mit Energie versorgt.

3. Elektrizitätszähler (54) nach Anspruch 1 oder 2, **dadurch gekennzeichnet, dass** die Bereitschafts-Spannungsversorgung (24) dazu ausgebildet ist, für unterschiedliche Elemente des Elektrizitätszählers (54) mindestens zwei unterschiedliche Bereitschafts-Versorgungsspannungen bereitzustellen.

4. Elektrizitätszähler (54) nach einem der Ansprüche 1 bis 3, **dadurch gekennzeichnet, dass** die Datenschnittstelle (22) eine serielle Schnittstelle ist und dass die Bereitschafts-Spannungsversorgung (24) dazu ausgebildet ist, aus einer an der seriellen Schnittstelle anliegenden Spannung eine Bereitschafts-Versorgungsspannung bereitzustellen.

5. Elektrizitätszähler (54) nach einem der Ansprüche 1 bis 4, **dadurch gekennzeichnet, dass** die im Bereitschaftsbetrieb von der Bereitschafts-Spannungsversorgung (24) versorgten Teile des Elektrizitätszählers (54) im Messbetrieb von dem Netzteil (12) mit elektrischer Energie versorgt werden.

6. Elektrizitätszähler (54) nach einem der Ansprüche 1 bis 5, **dadurch gekennzeichnet, dass** die im Bereitschaftsbetrieb von der Bereitschafts-Spannungsversorgung (24) versorgten Teile des Elektrizitätszählers (54) den Datenspeicher (38) umfassen.

7. Elektrizitätszähler (54) nach einem der Ansprüche 1 bis 6, **dadurch gekennzeichnet, dass** die im Bereitschaftsbetrieb von der Bereitschafts-Spannungsversorgung (24) versorgten Teile des Elektrizitätszählers (54) eine elektronische Anzeige (40) des Elektrizitätszählers (54) umfassen.

8. Elektrizitätszähler (54) nach einem der Ansprüche 1 bis 7, **dadurch gekennzeichnet, dass** die im Bereitschaftsbetrieb von der Bereitschafts-Spannungsversorgung (24) versorgten Teile des Elektrizitätszählers (54) die Recheneinrichtung (14) umfassen.

9. Elektrizitätszähler (54) nach einem der Ansprüche 1 bis 8, **dadurch gekennzeichnet, dass** die Recheneinrichtung (14) dazu ausgebildet ist, über die Datenschnittstelle (22) zu übertragende Daten zu verschlüsseln.

10. Ladevorrichtung für ein elektrisches Fahrzeug mit einem Elektrizitätszähler (54) nach einem der Ansprüche 1 bis 9 und einer Schalteinrichtung (56), die eine Verbindung zwischen dem elektrischen Versorgungsnetz (58) und dem Eingangs-Anschluss (L1_{E}, L2_{E}, L3_{E}) des Elektrizitätszählers (54) herstellen und trennen kann.

11. Ladevorrichtung nach Anspruch 10, **dadurch gekennzeichnet, dass** der Ausgangs-Anschluss (L1_{A}, L2_{A}, L3_{A}) über ein Kabel unmittelbar mit einer Ladebuchse oder einem Ladestecker verbunden ist.

12. Ladevorrichtung nach Anspruch 11, **dadurch gekennzeichnet, dass** der Elektrizitätszähler (54) einen Schaltausgang (42) aufweist, über den die Schalteinrichtung (56) angesteuert wird, wobei die im Bereitschaftsbetrieb von der Bereitschafts-Spannungsversorgung (24) versorgten Teile des Elektrizitätszählers (54) den Schaltausgang (42) umfassen.
